# EUROPÄISCHE PATENTANMELDUNG

(11) **EP 4 131 053 A1**
(43) Veröffentlichungstag der Anmeldung: **08.02.2023**
(21) Anmeldenummer: 21190143.4
(22) Anmeldetag: 06.08.2021
(51) Int. Cl.: G06F 30/27

(54) **VERFAHREN UND SYSTEM ZUM STEUERN EINES PRODUKTIONSSYSTEMS**

(71) Anmelder: Siemens Aktiengesellschaft, 80333 München (DE)
(72) Erfinder: Depeweg, Stefan, 81673 München (DE); Heesche, Kai, 81539 München (DE); Kaiser, Markus, 80539 München (DE)

(57) **Zusammenfassung**

Zum Steuern eines Produktionssystems zur Herstellung einer ersten Produktversion wird für mehrere Produktversionen jeweils eine Vielzahl von produktversionsspezifischen Trainingsdatensätzen eingelesen. Die Trainingsdatensätze umfassen jeweils einen eine Designvariante einer jeweiligen Produktversion spezifizierenden Designdatensatz (DR1, DR2) sowie einen Performanzwert (P1, P2) für diese Designvariante. Die Designdatensätze (DR1, DR2) werden in ein produktversionsübergreifendes Maschinenlernmodul eingespeist. Ein Ausgabesignal des produktversionsübergreifenden Maschinenlernmoduls wird sowohl in ein erstes als auch in ein zweites produktversionsspezifisches Maschinenlernmodul eingespeist. Die Maschinenlernmodule werden gemeinsam darauf trainiert, dass Ausgabedaten (O1) des ersten Maschinenlernmoduls die Performanzwerte (P1) der ersten Produktversion und Ausgabedaten (O2) des zweiten Maschinenlernmoduls die Performanzwerte (P2) der zweiten Produktversion reproduzieren. Daraufhin wird eine Vielzahl von synthetischen Designdatensätzen (DR1) generiert und in das trainierte produktversionsübergreifende Maschinenlernmodul eingespeist. Das resultierende Ausgabesignal des trainierten produktversionsübergreifenden Maschinenlernmoduls wird in das trainierte erste Maschinenlernmodul eingespeist. Abhängig von dessen resultierenden Ausgabedaten (O1) wird ein performanzoptimierter Designdatensatz aus den synthetischen Designdatensätzen (DR1) abgeleitet und zu Herstellung der ersten Produktversion ausgegeben.

## Beschreibung

Zur Herstellung komplexer technischer Produkte, wie beispielsweise Robotern, Motoren, Turbinen, Turbinenschaufeln, Verbrennungskraftmaschinen, Werkzeugen, Kraftfahrzeugen oder deren Komponenten, werden in zunehmendem Maße rechnergestützte Designsysteme eingesetzt. Mittels derartiger Designsysteme werden üblicherweise Designdaten erzeugt, die ein herzustellendes Produkt detailliert spezifizieren und mit deren Hilfe Produktionssysteme zur Herstellung des spezifizierten Produkts angesteuert werden können.

Zur Verbesserung von erwünschten Produkteigenschaften, die häufig durch eine Performanz ausgedrückt werden, wird in vielen Fällen angestrebt, die Designdaten für das Produkt automatisch zu optimieren. Eine solche Performanz kann dabei insbesondere eine Leistung, einen Ertrag, eine Geschwindigkeit, ein Gewicht, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, eine physikalische Eigenschaft, eine mechanische Eigenschaft, eine elektrische Eigenschaft, eine einzuhaltende Nebenbedingung oder andere Zielgrößen des Produkts betreffen.

Zur Optimierung einer Performanz eines herzustellenden Produkts werden häufig multidimensionale Optimierungsverfahren, sogenannte MDO-Verfahren (MDO: Multi Dimensional Optimization) eingesetzt. Diese MDO-Verfahren simulieren in der Regel eine Vielzahl von durch Designdaten spezifizierten Designvarianten des Produkts und wählen spezifisch diejenigen aus, die eine simulierte Performanz optimieren.

Derartige Simulationen erfordern jedoch häufig einen erheblichen Rechenaufwand, insbesondere da häufig eine große Vielzahl von Designvarianten zu bewerten sind. Zur Reduzierung des erforderlichen Rechenaufwands werden oft sogenannte Surrogat-Modelle benutzt, die insbesondere durch Verfahren des maschinellen Lernens darauf trainiert werden, relevante Simulationsergebnisse ohne detaillierte Simulation zu prädizieren. Derartige Surrogat-Modelle weisen jedoch häufig eine geringe oder eine schwankende Genauigkeit auf.

Es ist Aufgabe der vorliegenden Erfindung ein Verfahren und ein System zum Steuern eines Produktionssystems anzugeben, die eine effizientere Designoptimierung erlauben.

Gelöst wird diese Aufgabe durch ein Verfahren mit den Merkmalen des Patentanspruchs 1, durch ein System mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruchs 12.

Zum Steuern eines Produktionssystems zur Herstellung einer ersten Produktversion anhand von Designdatensätzen der ersten und einer zweiten Produktversion wird eine Vielzahl von produktversionsspezifischen Trainingsdatensätzen eingelesen. Die Trainingsdatensätze umfassen jeweils einen eine Designvariante einer jeweiligen Produktversion spezifizierenden Designdatensatz sowie einen eine Performanz dieser Designvariante quantifizierenden Performanzwert. Die Designdatensätze werden in ein produktversionsübergreifendes Maschinenlernmodul eingespeist. Ein Ausgabesignal des produktversionsübergreifenden Maschinenlernmoduls wird sowohl in ein erstes als auch in ein zweites produktversionsspezifisches Maschinenlernmodul eingespeist. Erfindungsgemäß werden die Maschinenlernmodule gemeinsam darauf trainiert, dass Ausgabedaten des ersten Maschinenlernmoduls die Performanzwerte der ersten Produktversion und Ausgabedaten des zweiten Maschinenlernmoduls die Performanzwerte der zweiten Produktversion reproduzieren. Daraufhin wird eine Vielzahl von synthetischen Designdatensätzen generiert und in das trainierte produktversionsübergreifende Maschinenlernmodul eingespeist. Das resultierende Ausgabesignal des trainierten produktversionsübergreifenden Maschinenlernmoduls wird in das trainierte erste Maschinenlernmodul eingespeist. Abhängig von resultierenden Ausgabedaten des trainierten ersten Maschinenlernmoduls wird ein performanzoptimierter Designdatensatz aus den synthetischen Designdatensätzen abgeleitet und zu Herstellung der ersten Produktversion ausgegeben.

Zum Ausführen des erfindungsgemäßen Verfahrens sind ein System zum Steuern eines Produktionssystems, ein Computerprogrammprodukt sowie ein computerlesbares, vorzugsweise nichtflüchtiges Speichermedium vorgesehen.

Das erfindungsgemäße Verfahren sowie das erfindungsgemäße System können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Die Erfindung erlaubt es, Daten von Optimierungen und Trainings, die für andere, insbesondere frühere Produktversionen durchgeführt wurden, zur Prädiktion der Performanz einer aktuell herzustellenden, ersten Produktversion sowie zu deren Optimierung zu nutzen. Eine solche Nutzung früherer Optimierungs- oder Trainingsergebnisse zum maschinellen Training für eine neue Anwendung wird häufig auch als Transfer-Learning bezeichnet.

Mittels des produktversionsübergreifenden Maschinenlernmoduls können verschiedenen Produktversionen gemeinsame Wirkungszusammenhänge zwischen Design und Performanz in vielen Fällen sehr effizient gelernt werden. Dabei können Trainingsdaten von früheren Produktversionen oft in sehr vorteilhafter Weise genutzt werden. Demgegenüber können Unterschiede zwischen den Produktversionen durch die produktversionsspezifischen Maschinenlernmodule berücksichtigt werden.

Auf diese Weise kann eine Trainingseffizienz, insbesondere bei ähnlichen Produktversionen oft erheblich gesteigert werden. In vielen Fällen werden weniger Trainingsdaten für die neu herzustellende, erste Produktversion benötigt. Darüber hinaus kann häufig eine Optimierungsgeschwindigkeit und/oder eine Prädiktionsgenauigkeit gesteigert werden.

Vorteilhafte Ausführungsformen und Weiterbildungen der Erfindung sind in den abhängigen Ansprüchen angegeben.

Gemäß einer vorteilhaften Ausführungsform der Erfindung kann für eine Vielzahl von Designdatensätzen jeweils ein Performanzwert für die durch den jeweiligen Designdatensatz spezifizierte Designvariante simulativ ermittelt werden. Ein jeweiliger Designdatensatz kann dann zusammen mit dem jeweils prädizierten Performanzwert als Trainingsdatensatz verwendet werden. Zur simulativen Ermittlung von Performanzwerten sind eine Vielzahl von effizienten Simulationsverfahren, insbesondere zur mechanischen, elektrischen und/oder thermischen Simulation von Produkten oder deren Komponenten verfügbar.

Nach einer weiteren vorteilhaften Ausführungsform der Erfindung können durch die erste Produktversion zu erfüllende, erste Produktvorgaben sowie durch die zweite Produktversion zu erfüllende, zweite Produktvorgaben eingelesen werden. Beim gemeinsamen Training der Maschinenlernmodule können die ersten Produktvorgaben in das erste Maschinenlernmodul und die zweiten Produktvorgaben in das zweite Maschinenlernmodul eingespeist werden. Entsprechend können dann bei der Einspeisung des resultierenden Ausgabesignals in das trainierte erste Maschinenlernmodul auch die ersten Produktvorgaben in das trainierte erste Maschinenlernmodul eingespeist werden. Auf diese Weise können Korrelationen zwischen Produktvorgaben, Designdatensätzen und/oder Performanzwerten durch das Training modelliert bzw. gelernt und zur Prädiktion der Performanz genutzt werden.

Weiterhin können die produktversionsspezifischen Maschinenlernmodule jeweils ein lineares Regressionsmodell und das produktversionsübergreifende Maschinenlernmodul einen Gaußprozess implementieren. Auf diese Weise können lineare Korrelationen zwischen Performanzwerten verschiedener Produktversionen effizient gelernt werden. Insofern lineare Zusammenhänge in der Regel durch verhältnismäßig wenige Parameter modellierbar sind, werden zum Training in vielen Fällen nur verhältnismäßig wenige Trainingsdaten benötigt.

Alternativ oder zusätzlich können die Maschinenlernmodule jeweils ein neuronales Netz umfassen. Dabei kann das produktversionsübergreifende Maschinenlernmodul insbesondere mittels eines mehrlagigen Perzeptrons implementiert sein. Die produktversionsspezifischen Maschinenlernmodule können jeweils eine oder mehrere neuronale Schichten umfassen. Durch die neuronalen Schichten können auch nichtlineare Korrelationen zwischen Performanzwerten verschiedener Produktversionen effizient gelernt werden.

Nach einer vorteilhaften Weiterbildung der Erfindung können mehrere Sätze von Maschinenlernmodulen mit jeweils einem produktversionsübergreifenden Maschinenlernmodul sowie mindestens zwei produktversionsspezifischen Maschinenlernmodulen bereitgestellt werden. Weiterhin kann eine Anzahl oder Menge verfügbarer Trainingsdatensätze ermittelt werden. Abhängig von der ermittelten Anzahl oder Menge kann dann einer der Sätze zur Ausführung des Trainings sowie zur Ableitung des performanzoptimierten Designdatensatzes selektiert werden. Auf diese Weise kann je nach Anzahl oder Menge verfügbarer Trainingsdaten gezielt ein für diese Anzahl oder Menge besonders geeigneter Satz von Maschinenlernmodulen ausgewählt werden. So zum Beispiel ein oder mehrere lineare Regressionsmodelle für den Fall, dass nur verhältnismäßig wenige Trainingsdaten vorliegen.

Darüber hinaus kann geprüft werden, ob für die erste und für die zweite Produktversion jeweils Produktvorgaben vorliegen.

Dabei kann insbesondere auch geprüft werden, ob die Produktvorgaben beiden Produktversionen gemeinsame Produktparameter betreffen. Bei einem positiven Prüfungsergebnis kann ein Satz von Maschinenlernmodulen selektiert werden, in dessen produktversionsspezifische Maschinenlernmodule Produktvorgaben einzuspeisen sind.

Ein Ausführungsbeispiel der Erfindung wird nachfolgend anhand der Zeichnung näher erläutert. Dabei veranschaulichen jeweils in schematischer Darstellung:
- Figur 1:: ein Designsystem beim Steuern eines Produktionssystems zur Herstellung eines Produkts,
- Figur 2:: ein erfindungsgemäßes Designsystem in einer Trainingsphase,
- Figur 3:: unterschiedliche Sätze von Maschinenlernmodulen und
- Figur 4:: das erfindungsgemäße Designsystem in einer Anwendungsphase.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

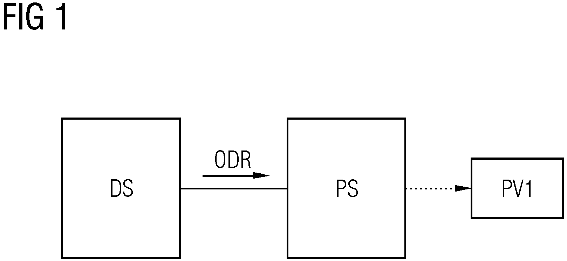

Figur 1 veranschaulicht ein an ein Produktionssystem PS gekoppeltes Designsystem DS in schematischer Darstellung. Das Designsystem DS dient zum rechnergestützten Konstruieren einer hinsichtlich einer Performanz optimierten, neuen Version eines Produkts PV1 sowie zum Ansteuern des Produktionssystems PS, um so die Produktversion PV1 herzustellen. Das Produktionssystem PS kann hierbei eine Fertigungsanlage, einen Roboter, eine Werkzeugmaschine und/oder andere Geräte zur Herstellung oder Bearbeitung des Produkts PV1 oder einer Komponente davon anhand von Designdaten umfassen. Das herzustellende Produkt PV1 kann insbesondere ein Motor, ein Roboter, eine Werkzeugmaschine, eine Turbinenschaufel, eine Windturbine, eine Gasturbine, ein Kraftfahrzeug oder eine andere Maschine, eine andere technische Struktur oder eine Komponente dieser Produkte sein.

Ein jeweiliges Design oder eine jeweilige Designvariante der herzustellenden Produktversion PV1 wird durch Designdaten in Form eines jeweiligen Designdatensatzes spezifiziert. Ein derartiger Designdatensatz kann insbesondere eine Geometrie, eine Struktur, eine Eigenschaft, einen Produktionsschritt, ein Material und/oder eine Komponente der Produktversion PV1 spezifizieren.

Erfindungsgemäß soll das Designsystem DS dazu befähigt werden, einen realistischen und hinsichtlich einer Performanz der Produktversion PV1 optimierten Designdatensatz ODR weitgehend automatisch zu erzeugen. Unter einem Optimieren sei in dieser Anmeldung auch eine Annäherung an ein Optimum verstanden. Die Performanz kann dabei insbesondere eine Leistung, einen Ertrag, eine Geschwindigkeit, ein Gewicht, eine Laufzeit, eine Präzision, eine Fehlerrate, einen Ressourcenverbrauch, eine Schwingungsneigung, eine Temperaturfestigkeit, eine Steifigkeit, eine Materialermüdung, einen Wirkungsgrad, eine Effizienz, einen Schadstoffausstoß, eine Stabilität, einen Verschleiß, eine Lebensdauer, eine physikalische Eigenschaft, eine mechanische Eigenschaft, eine elektrische Eigenschaft, eine einzuhaltende Nebenbedingung oder andere Zielgrößen des Produkts PV1 betreffen.

Zu dem vorgenannten Zweck wird das Designsystem DS anhand von verfügbaren Designdatensätzen für die herzustellende erste Produktversion PV1 und zusätzlich anhand von verfügbaren Designdatensätzen für mindestens eine weitere Produktversion mit Verfahren des maschinellen Lernens - wie unten näher erläutert - trainiert.

Als Ergebnis der Optimierung generiert das Designsystem DS einen performanzoptimierten Designdatensatz ODR und übermittelt diesen zum Produktionssystem PS. Anhand des performanzoptimierten Designdatensatzes ODR wird das Produktionssystem PS dazu veranlasst, eine performanzoptimierte neue Produktversion PV1 gemäß dem performanzoptimierten Designdatensatz ODR herzustellen.

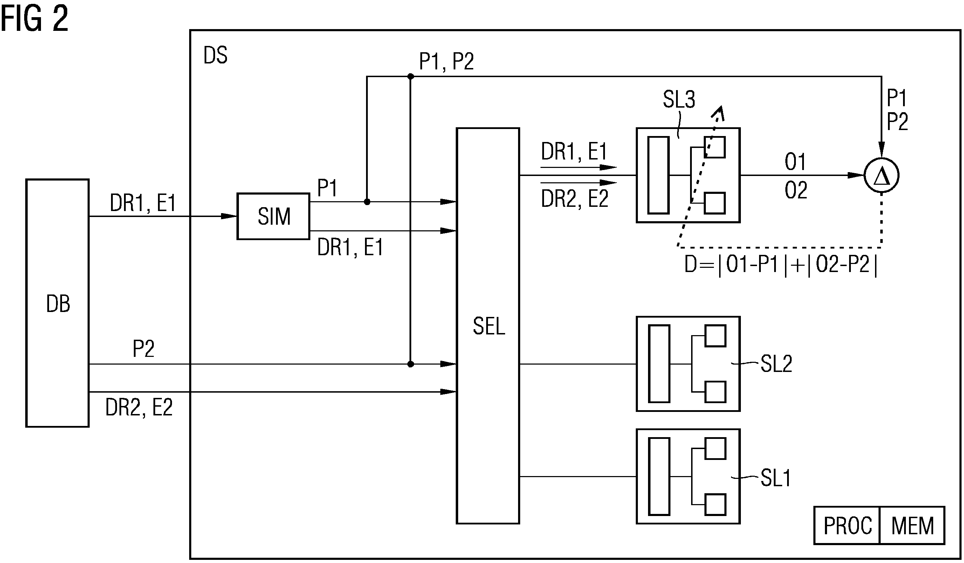

Figur 2 veranschaulicht ein erfindungsgemäßes Designsystem DS in einer Trainingsphase. Das Designsystem DS verfügt über einen oder mehrere Prozessoren PROC zur Ausführung des erfindungsgemäßen Verfahrens sowie über einen oder mehrere Speicher MEM zum Speichern von zu verarbeitenden Daten.

Zum Training des Designsystems DS werden eine Vielzahl von Trainingsdatensätzen für die aktuell herzustellende, erste Produktversion PV1 sowie zusätzlich eine Vielzahl von Trainingsdatensätzen für mindestens eine weitere Produktversion eingelesen oder generiert. Die mindestens eine weitere Produktversion kann insbesondere eine frühere Version des herzustellenden Produkts sein, für die bereits Performanzdaten oder weitere Erfahrungswerte vorliegen. Aus Übersichtlichkeitsgründen sind in den Figuren nur Daten und Verarbeitungsschritte für zwei Produktversionen explizit dargestellt und beschrieben.

Die für die erste Produktversion PV1 spezifischen Trainingsdatensätze umfassen jeweils einen eine Designvariante der ersten Produktversion PV1 spezifizierenden Designdatensatz DR1 sowie einen die Performanz dieser Designvariante quantifizierenden Performanzwert P1. Entsprechend umfassen die für eine zweite Produktversion spezifischen Trainingsdatensätze jeweils einen eine Designvariante der zweiten Produktversion spezifizierenden Designdatensatz DR2 sowie einen die Performanz dieser Designvariante quantifizierenden Performanzwert P2.

Darüber hinaus werden für die erste Produktversion PV1 noch erste Produktvorgaben E1 eingelesen, die von dieser Produktversion PV1 zu erfüllen sind, sowie zweite Produktvorgaben E2, die von der zweiten Produktversion zu erfüllen sind. Die produktversionsspezifischen Produktvorgaben E1 und E2 sind fest vorgegeben und sind, anders als die Designdatensätze, nicht zu optimieren. Durch die Produktvorgaben E1 und E2 können beispielsweise ein Produkttyp, eine Produktgeometrie, Abmessungen des Produkts, eine Produktumgebung, eine Betriebsumgebung, Betriebsvorgaben, Randbedingungen, Nebenbedingungen, ein Aufstellungsort, ein Umgebungstemperaturbereich und/oder andere Umgebungsdaten spezifiziert werden.

Für das vorliegende Ausführungsbeispiel sei angenommen, dass die Vielzahl von Designdatensätzen DR1 sowie die Produktvorgaben E1 der ersten Produktversion PV1 sowie die Vielzahl der Designdatensätze DR2 mit den zugehörigen Performanzwerten P2 sowie mit den Produktvorgaben E2 durch das Designsystem DS aus einer Datenbank DB eingelesen werden.

Die Datenbank DB umfasst eine Vielzahl von hinsichtlich der Performanz bewerteten Trainingsdatensätzen, insbesondere auch für frühere zweite Produktversionen. Die Performanzwerte P2 können dabei insbesondere aus Messungen an früheren Produktversionen oder aus Simulationen dieser früheren Produktversionen stammen.

Es sei weiterhin angenommen, dass für die durch die Designdatensätze DR1 spezifizierten Designvarianten der ersten Produktversion PV1 noch keine Performanzangaben vorliegen. Aus diesem Grund werden die Designdatensätze DR1 sowie die Produktvorgaben E1 einem Simulator SIM des Designsystems DS zugeführt. Der Simulator SIM dient zur Simulation von durch die zugeführten Designdatensätze, hier DR1, spezifizierten Designvarianten sowie zur simulativen Ermittlung der jeweiligen Performanz, hier P1, einer jeweiligen Designvariante der ersten Produktversion PV1. Zur Durchführung derartiger Simulationen stehen eine Vielzahl von bekannten Simulationsverfahren oder Simulatoren zur mechanischen, elektrischen oder thermischen Simulation zur Verfügung.

Die Designdatensätze DR1 werden zusammen mit den zugehörigen simulativ ermittelten Performanzwerten P1 sowie mit den Produktvorgaben E1 vom Simulator SIM zu einem Selektionsmodul SEL des Designsystems DS übermittelt. Ebenso werden die Designdatensätze DR2 mit den zugehörigen Performanzwerten P2 sowie den Produktvorgaben E2 in das Selektionsmodul SEL eingespeist.

An das Selektionsmodul SEL sind mehrere Sätze SL1, SL2 und SL3 von Maschinenlernmodulen angekoppelt oder zumindest durch das Selektionsmodul SEL adressierbar. Das Selektionsmodul SEL dient dem Zweck, abhängig von einem Vorliegen von Produktvorgaben, hier E1, E2, sowie abhängig von einer Menge oder Anzahl von verfügbaren Trainingsdatensätzen einen der Sätze SL1, SL2 oder SL3 zu selektieren. Zu diesem Zweck wird durch die Selektionseinrichtung SEL die Anzahl oder Menge der Trainingsdatensätze ermittelt. Insbesondere kann dabei eine Anzahl oder Menge von Trainingsdatensätzen mit hohen Performanzwerten ermittelt werden, insofern derartige Trainingsdatensätze für eine Bewertung hochperformanter Designvarianten besonders relevant sind. Darüber hinaus wird durch das Selektionsmodul SEL geprüft, ob Produktvorgaben, hier E1, E2, für beide Produktversionen vorliegen und beiden Produktversionen gemeinsame Produktparameter betreffen.

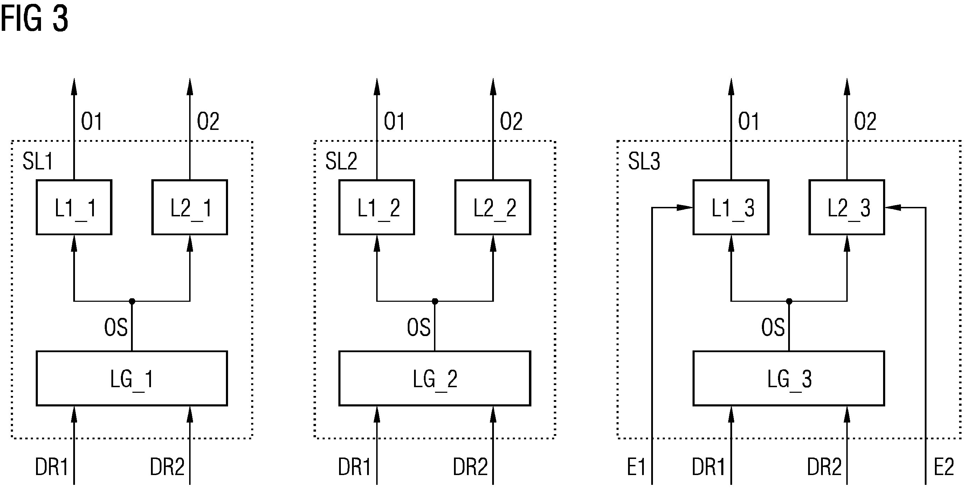

Die unterschiedlichen Sätze SL1, SL2 und SL3 von Maschinenlernmodulen sind in Figur 3 schematisch dargestellt. Der Satz SL1 umfasst hierbei ein produktversionsübergreifendes Maschinenlernmodul LG_1 sowie produktversionsspezifische Maschinenlernmodule L1_1 und L2_1. Entsprechend umfasst der Satz SL2 ein produktversionsübergreifendes Maschinenlernmodul LG_2 sowie produktversionsspezifische Maschinenlernmodule L1_2 und L2_2. Weiterhin umfasst der Satz SL3 ein produktversionsübergreifendes Maschinenlernmodul LG_3 sowie produktversionsspezifische Maschinenlernmodule L1_3 und L2_3. Die produktversionsspezifischen Maschinenlernmodule L1_1, L1_2 und L1_3 sind dabei der ersten Produktversion PV1 zugeordnet, während die produktversionsspezifischen Maschinenlernmodule L2_1, L2_2 und L2_3 der zweiten Produktversion zugeordnet sind.

Ein jeweiliger Satz SL1, SL2 bzw. SL3 soll im Falle seiner Selektion darauf trainiert werden, anhand von eingespeisten Designdatensätzen eine Performanz einer hierdurch spezifizierten ersten Produktversion PV1 sowie eine Performanz einer hierdurch spezifizierten zweiten Produktversion zu prädizieren.

Zu diesem Zweck werden dem betreffenden Satz SL1, SL2 bzw. SL3 jeweils die Designdatensätze DR1 und DR2 als Eingabedaten zugeführt. Aus den Eingabedaten DR1 und DR2 werden durch den betreffenden Satz SL1, SL2 bzw. SL3 Ausgabendaten O1 und O2 abgeleitet und ausgegeben. Im vorliegenden Ausführungsbeispiel werden dem Satz SL3 zusätzlich die Produktvorgaben E1 und E2 als Eingabedaten zugeführt.

Durch die Ausgabedaten O1 und O2 soll jeweils ein tatsächlicher Performanzwert einer durch die Designdatensätze DR1 bzw. DR2 spezifizierten Designvariante möglichst gut reproduziert werden.

Unter einem Training sei allgemein eine Optimierung einer Abbildung von Eingabedaten, hier DR1, DR2 und ggf. E1 und E2, auf Ausgabedaten, hier O1 und O2, verstanden. Diese Abbildung wird nach vorgegebenen Kriterien während einer Trainingsphase optimiert. Als Kriterien können hierbei zum Beispiel bei Prädiktionsmodellen ein Prädiktionsfehler oder Reproduktionsfehler, bei Klassifikationsmodellen ein Klassifikationsfehler und/oder bei Steuermodellen eine Abweichung von einer optimierten Steueraktion herangezogen werden. Durch das Training können beispielsweise Modellparameter, Verfahrensparameter, Vernetzungsstrukturen von Neuronen eines neuronalen Netzes und/oder Gewichte von Verbindungen zwischen den Neuronen so eingestellt bzw. optimiert werden, dass die Kriterien möglichst gut erfüllt werden. Das Training kann somit als Optimierungsproblem aufgefasst werden. Für derartige Optimierungsprobleme steht eine Vielzahl von effizienten Optimierungsverfahren zur Verfügung. Insbesondere können genetische Optimierungsverfahren, Gradientenabstiegsverfahren, Rückpropragationsverfahren und/oder Partikelschwarmoptimierungen verwendet werden.

Im vorliegenden Fall soll für das Training ausgenutzt werden, dass ähnliche Produktversionen ähnliche Wirkungszusammenhänge oder Korrelationen zwischen Designdatensätzen und Performanzwerten aufweisen. Durch ein Training eines gemeinsamen Maschinenlernmoduls für unterschiedliche, aber ähnliche Produktversionen können gemeinsame Wirkungszusammenhänge oder Korrelationen in der Regel sehr effizient gelernt werden. Darüber hinaus können Wirkungszusammenhänge oder Korrelationen, die sich bei verschiedenen Produktversionen unterscheiden, durch produktversionsspezifische Maschinenlernmodule effizient abgebildet werden. Auf diese Weise kann ein effizientes, sogenanntes Transfer-Learning implementiert werden, bei dem Trainingsergebnisse oder Trainingsdaten früherer Produktversionen in vorteilhafter Weise für eine aktuell herzustellende Produktversion, hier PV1, verwendet werden.

Die unterschiedlichen Sätze SL1, SL2 und SL3 von Maschinenlernmodulen erlauben es, je nach Menge von verfügbaren Trainingsdaten oder Produktvorgaben, denjenigen der Sätze SL1, SL2 oder SL3 zu selektieren, der für die jeweiligen Trainingsumstände besonders geeignet ist.

Im Folgenden werden die in Figur 3 beispielhaft dargestellten Sätze SL1, SL2 und SL3 näher beschrieben.

In Satz SL1 implementiert das beiden Produktversionen gemeinsame, produktversionsübergreifende Maschinenlernmodul LG 1 vorzugsweisen einen Gaußprozess und/oder ein Bayes-Modell, während die produktversionsspezifischen Maschinenlernmodule L1_1 und L2_1 jeweils ein lineares Regressionsmodell implementieren. In das gemeinsame Maschinenlernmodul LG_1 werden die Designdatensätze DR1 und DR2 als Eingabedaten eingespeist. Ein aus den Eingabedaten DR1, DR2 abgeleitetes Ausgabesignal OS des gemeinsamen Maschinenlernmoduls LG_1 wird sowohl in das Maschinenlernmodul L1_1 als auch in das Maschinenlernmodul L2_1 eingespeist. Aus dem Ausgabesignal OS werden durch das Maschinenlernmodul L1_1 die Ausgabedaten O1 und durch das Maschinenlernmodul L2_1 die Ausgabedaten O2 abgeleitet und ausgegeben. Ein solcher Satz von Maschinenlernmodulen wird häufig auch als Coregionalization-Model bezeichnet.

Durch die linearen Regressionsmodelle L1_1 und L2_1 können lineare Zusammenhänge zwischen den Performanzwerten verschiedener Produktversionen sehr effizient gelernt werden. Derartige lineare Regressionsmodelle können zudem durch verhältnismäßig wenige Parameter modelliert werden, zu deren Optimierung in vielen Fällen bereits eine verhältnismäßig geringe Menge an Trainingsdaten ausreicht. Mithin wird der Satz SL1 im vorliegenden Ausführungsbeispiel durch das Selektionsmodul SEL dann selektiert, wenn die verfügbare Trainingsdatenmenge verhältnismäßig gering ist und beispielsweise einen vorgegebenen Schwellenwert unterschreitet.

Der Satz SL2 umfasst im vorliegenden Ausführungsbeispiel ein künstliches neuronales Netz, insbesondere ein mehrlagiges Perzeptron als den Produktversionen gemeinsames Maschinenlernmodul LG_2. Die produktversionsspezifischen Maschinenlernmodule L1_2 und L2_2 sind jeweils als künstliches neuronales Netz aus einer oder mehreren Schichten ausgebildet. Die Schichten können hierbei linear oder nichtlinear wirken. In das gemeinsame Maschinenlernmodul LG_2 werden die Designdatensätze DR1 und DR2 als Eingabedaten eingespeist. Das gemeinsame Maschinenlernmodul LG_2 leitet daraus ein Ausgabesignal OS ab, das sowohl in das Maschinenlernmodul L1_2 als auch in das Maschinenlernmodul L2_2 eingespeist wird. Aus dem Ausgabesignal OS werden durch das Maschinenlernmodul L1_2 Ausgabedaten O1 und durch das Maschinenlernmodul L2_2 Ausgabedaten O2 abgeleitet und ausgegeben.

Anders als beim Satz SL1 kann durch die produktversionsspezifischen Maschinenlernmodule L1_2 und L2_2 auch ein nichtlinearer Zusammenhang zwischen der Performanz verschiedener Produktversionen gut modelliert bzw. reproduziert werden. Die hierdurch erreichte größere Flexibilität erfordert aber in der Regel mehr Modellierungsparameter als im linearen Fall. Der Satz SL2 wird durch das Selektionsmodell SEL somit vorzugsweise dann selektiert, wenn eine größere Menge an Trainingsdaten verfügbar ist bzw. diese Menge einen vorgegebenen Schwellenwert überschreitet.

Der Satz SL3 umfasst im vorliegenden Ausführungsbeispiel das beiden Produktversionen gemeinsame Maschinenlernmodul LG_3 sowie die produktversionsspezifischen Maschinenlernmodule L1_3 und L2_3. Die Maschinenlernmodule LG_3, L1_3 oder L2_3 können jeweils mittels eines künstlichen neuronalen Netzes und/oder mittels eines Gaußprozesses implementiert werden. Anders als die Sätze SL1 und SL2 kann der Satz SL3 auch produktversionsspezifische Produktvorgaben, hier E1 und E2, explizit verarbeiten und hinsichtlich ihrer Korrelation mit Designdatensätzen und/oder Performanzwerten modellieren.

Die Designdatensätze DR1 und DR2 werden in das gemeinsame Maschinenlernmodul LG_3 als Eingabedaten eingespeist, das daraus ein Ausgabesignal OS ableitet und dieses in beide Maschinenlernmodule L1_3 und L2_3 einspeist. Weiterhin werden die Produktvorgaben E1 als zusätzliche Eingabedaten in das Maschinenlernmodul L1_3 und die Produktvorgaben E2 als zusätzliche Eingabedaten in das Maschinenlernmodul L2_3 eingespeist. Aus dem Ausgabesignal OS sowie den Produktvorgaben E1 werden durch das Maschinenlernmodul L1_3 Ausgabedaten O1 abgeleitet und ausgegeben. Entsprechend werden aus dem Ausgabesignal OS und den Produktvorgaben E2 durch das Maschinenlernmodul L2_3 Ausgabedaten O2 abgeleitet und ausgegeben. Aufgrund der zusätzlichen Berücksichtigung der produktversionsspezifischen Produktvorgaben E1 und E2 durch die produktversionsspezifischen Maschinenlernmodule L1_3 und L2_3 können Korrelationen zwischen Produktvorgaben, Designdatensätzen und Performanzwerten in vielen Fällen erkannt und gelernt werden. Aufgrund der zusätzlichen Differenzierungsmöglichkeiten durch die Produktvorgaben E1 und E2 sind jedoch für ein effizientes Training in der Regel mehr Trainingsdaten als beim Training der anderen Sätze SL1 und SL2 erforderlich. Der Satz SL3 wird dementsprechend vorzugsweise dann durch das Selektionsmodul SEL selektiert, wenn produktversionsspezifische Produktvorgaben, hier E1 und E2, vorliegen und eine Menge an Trainingsdaten einen vorgegebenen Schwellenwert überschreitet.

Anstelle oder neben den Sätzen SL1, SL2 und SL3 können einer oder mehrere andere Sätze von Maschinenlernmodulen vorgesehen sein, die in analoger Weise betrieben werden. Zudem kann ein jeweiliger Satz oder ein jeweiliges Maschinenlernmodul auch ein bayessches neuronales Netz, ein rekurrentes neuronales Netz, ein faltendes neuronales Netz, einen Autoencoder, eine Deep Learning-Architektur, eine Support-Vector-Machine, einen k-nächste-Nachbarn-Klassifikator und/oder einen Entscheidungsbaum umfassen.

Für das vorliegende Ausführungsbeispiel sei angenommen, dass eine große Vielzahl von Trainingsdaten verfügbar ist und mithin eine vom Selektionsmodul SEL ermittelte Anzahl von Trainingsdatensätzen einen für den Satz SL3 vorgesehenen Schwellenwert überschreitet. Insofern durch das Selektionsmodul SEL auch festgestellt wird, dass Produktvorgaben E1 und E2 für beide Produktversionen vorliegen und gemeinsame Produktparameter betreffen, wird - wie Figur 2 weiter veranschaulicht - der Satz SL3 durch das Selektionsmodul SEL selektiert. Dementsprechend werden die Designdatensätze DR1 mit den Produktvorgaben E1 und die Designdatensätze DR2 mit den Produktvorgaben E2 durch das Selektionsmodul SEL gezielt in den selektierten Satz SL3 als Eingabedaten weitergeleitet. Aus den Eingabedaten DR1, E1, DR2 und E2 werden durch den Satz SL3, wie oben beschrieben, die Ausgabedaten O1 und O2 abgeleitet und ausgegeben.

Die Ausgabedaten O1 werden daraufhin mit den Performanzwerten P1 und die Ausgabedaten O2 mit den Performanzwerten P2 verglichen und eine Abweichung D ermittelt. Dabei können insbesondere euklidische Abstände |O1-P1| und |O2-P2| zwischen den Ausgabedaten O1 und den Performanzwerten P1 sowie zwischen den Ausgabedaten O2 und den Performanzwerten P2 berechnet werden. Die Abweichung D kann damit beispielsweise als Summe dieser Abstände gemäß D = |O1-P1| + |O2-P2|, als gewichtete Summe oder als eine andere Kombination von Einzelabweichungen ermittelt werden.

Die Abweichung D wird, wie in Figur 2 durch einen strichlierten Pfeil angedeutet, zum Satz SL3 zurückgeführt. Anhand der zurückgeführten Abweichung D werden die im Satz SL3 enthaltenen Maschinenlernmodule LG_3, L1_3 und L2_3 gemeinsam darauf trainiert, die Abweichung D zu minimieren. Zur Durchführung einer solchen Minimierung ist eine Vielzahl von effizienten numerischen Verfahren verfügbar, wie zum Beispiel Gradientenabstiegsverfahren, Rückpropagationsverfahren, Partikelschwarmoptimierungen und/oder genetische Optimierungsverfahren.

Durch die Minimierung der Abweichung D werden die Maschinenlernmodule LG_3, L1_3 und L2_3 des Satzes SL3 darauf trainiert, zu vorgegebenen Designdatensätzen DR1 bzw. DR2 und Produktvorgaben E1 bzw. E2 durch ihre Ausgabedaten O1 bzw. O2 die zugehörigen Performanzwerte P1 bzw. P2 für Designvarianten beider Produktversionen zu prädizieren.

Durch das produktversionsübergreifende Maschinenlernmodul LG_3 können Gemeinsamkeiten verschiedener Produktversionen effizient gelernt werden. Demgegenüber können Unterschiede zwischen den Produktversionen durch die produktversionsspezifischen Maschinenlernmodule L1_3 und L2_3 abgebildet werden.

Falls anstelle des Satzes SL3 einer der anderen Sätze SL1 oder SL2 durch das Selektionsmodul SEL selektiert wird, kann das Training offensichtlich in analoger Weise ausgeführt werden.

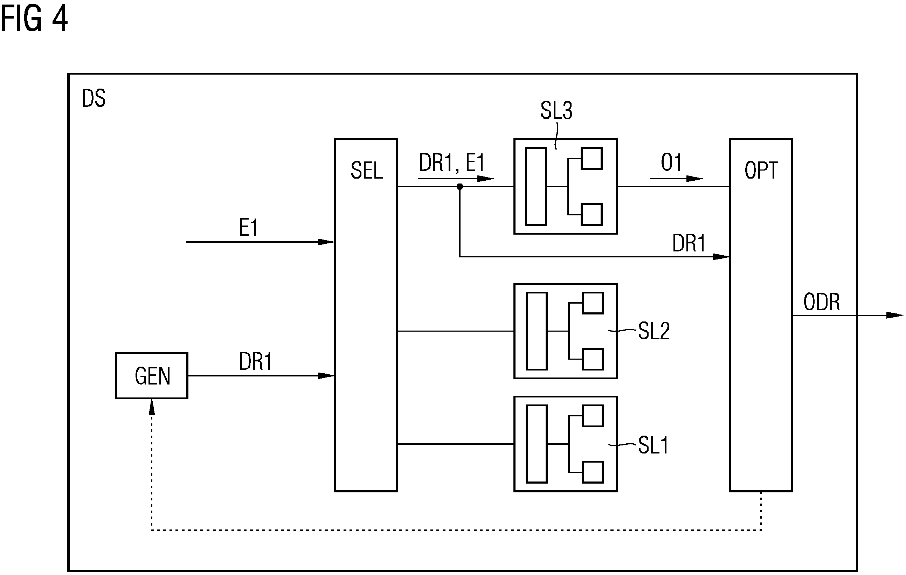

Figur 4 veranschaulicht das trainierte Designsystem DS bei einer Generierung eines performanzoptimierten Designdatensatzes ODR. Zu diesem Zweck wird durch einen Generator GEN des Designsystems DS eine Vielzahl von synthetischen Designdatensätze DR1 generiert, die jeweils eine Designvariante der herzustellenden, ersten Produktversion PV1 spezifizieren. Die Generierung erfolgt zumindest teilweise zufallsinduziert.

Die synthetischen Designdatensätze DR1 werden vom Generator GEN in das Selektionsmodul SEL eingespeist. Darüber hinaus werden dem Selektionsmodul SEL auch die Produktvorgaben E1 für die erste Produktversion PV1 zugeführt. Das Selektionsmodul SEL speist dann die synthetischen Designdatensätze DR1 sowie die Produktvorgaben E1 gezielt in den selektierten und trainierten Satz SL3 ein. Die synthetischen Designdatensätze DR1 werden dabei dem gemeinsamen Maschinenlernmodul LG_3 als Eingabedaten zugeführt. Das hieraus resultierende Ausgabesignal OS des gemeinsamen Maschinenlernmoduls LG_3 sowie die Produktvorgaben E1 werden dann in das für die herzustellende, erste Produktversion PV1 spezifische Maschinenlernmodul L1_3 als Eingabedaten eingespeist. Die hieraus durch das Maschinenlernmodul L1_3 abgeleiteten Ausgabedaten O1 werden ausgegeben und in ein Optimierungsmodul OPT des Designsystems DS eingespeist. Dem Optimierungsmodul OTP werden darüber hinaus auch die synthetischen Designdatensätze DR1 zugeführt.

Das Optimierungsmodul OPT leitet abhängig von den zugeführten Ausgabedaten O1, d.h. von den prädizierten Performanzwerten, einen performanzoptimierten Designdatensatz ODR aus den synthetischen Designdatensätzen DR1 ab. So kann beispielsweise derjenige synthetische Designdatensatz als performanzoptimierter Designdatensatz ODR ausgewählt werden, für den der höchste Performanzwert O1 prädiziert wird. Alternativ kann der performanzoptimierte Designdatensatz ODR aus mehreren synthetischen Designdatensätzen mit den höchsten oder mit besonderes hohen prädizierten Performanzwerten O1 interpoliert werden.

Der aus den synthetischen Designdatensätzen DR1 abgeleitete performanzoptimierte Designdatensatz ODR wird anschließend ausgegeben, um das Produktionssystem PS, wie im Zusammenhang mit Figur 1 beschrieben, zur Herstellung der optimierten Produktversion PV1 anzusteuern.

## Patentansprüche

1. Computerimplementiertes Verfahren zum Steuern eines Produktionssystems (PS) zur Herstellung einer ersten Produktversion (PV1) anhand von Designdatensätzen (DR1, DR2) der ersten und einer zweiten Produktversion, wobei
a) eine Vielzahl von produktversionsspezifischen Trainingsdatensätzen eingelesen werden, die jeweils einen eine Designvariante einer jeweiligen Produktversion spezifizierenden Designdatensatz (DR1, DR2) sowie einen eine Performanz dieser Designvariante quantifizierenden Performanzwert (P1, P2) umfassen,
b) die Designdatensätze (DR1, DR2) in ein produktversionsübergreifendes Maschinenlernmodul (LG_3) eingespeist werden,
c) ein Ausgabesignal (OS) des produktversionsübergreifenden Maschinenlernmoduls (LG3) sowohl in ein erstes (L1_3) als auch in ein zweites (L2_3) produktversionsspezifisches Maschinenlernmodul eingespeist wird,
d) die Maschinenlernmodule (LG_3, L1_3, L2_3) gemeinsam darauf trainiert werden, dass Ausgabedaten (O1) des ersten Maschinenlernmoduls (L1_3) die Performanzwerte (P1) der ersten Produktversion und Ausgabedaten (O2) des zweiten Maschinenlernmoduls (L2_3) die Performanzwerte (P2) der zweiten Produktversion reproduzieren,
e) eine Vielzahl von synthetischen Designdatensätzen (DR1) generiert und in das trainierte produktversionsübergreifende Maschinenlernmodul (LG_3) eingespeist wird,
f) das resultierende Ausgabesignal (OS) des trainierten produktversionsübergreifenden Maschinenlernmoduls (LG_3) in das trainierte erste Maschinenlernmodul (L1_3) eingespeist wird, und
g) abhängig von resultierenden Ausgabedaten (O1) des trainierten ersten Maschinenlernmoduls (L1_3) ein performanzoptimierter Designdatensatz (ODR) aus den synthetischen Designdatensätzen (DR1) abgeleitet und zu Herstellung der ersten Produktversion (PV1) ausgegeben wird.

2. Verfahren nach Anspruch 1, **dadurch gekennzeichnet,**
**dass** für eine Vielzahl von Designdatensätzen (DR1) jeweils ein Performanzwert (P1) für die durch den jeweiligen Designdatensatz (DR1) spezifizierte Designvariante simulativ ermittelt wird, und
**dass** ein jeweiliger Designdatensatz (DR1) zusammen mit dem jeweils prädizierten Performanzwert (P1) als Trainingsdatensatz verwendet wird.

3. Verfahren nach einem der vorhergehenden Ansprüche, **dadurch gekennzeichnet,**
**dass** durch die erste Produktversion (PV1) zu erfüllende, erste Produktvorgaben (E1) sowie durch die zweite Produktversion zu erfüllende, zweite Produktvorgaben (E2) eingelesen werden, dass beim gemeinsamen Training der Maschinenlernmodule (LG_3, L1_3, L2_3) die ersten Produktvorgaben (E1) in das erste Maschinenlernmodul (L1_3) und die zweiten Produktvorgaben (E2) in das zweite Maschinenlernmodul (L2_3) eingespeist werden, und
**dass** bei der Einspeisung des resultierenden Ausgabesignals (OS) in das trainierte erste Maschinenlernmodul (L1_3) auch die ersten Produktvorgaben (E1) in das trainierte erste Maschinenlernmodul (L1_3) eingespeist werden.

4. Verfahren nach einem der vorhergehenden Ansprüche, **dadurch gekennzeichnet,**
**dass** das produktversionsübergreifende Maschinenlernmodul einen Gaußprozess und die produktversionsspezifischen Maschinenlernmodule jeweils ein lineares Regressionsmodell implementieren.

5. Verfahren nach einem der vorhergehenden Ansprüche, **dadurch gekennzeichnet,**
**dass** die Maschinenlernmodule jeweils ein neuronales Netz umfassen.

6. Verfahren nach einem der vorhergehenden Ansprüche, **dadurch gekennzeichnet,**
**dass** mehrere Sätze (SL1, SL2, SL3) von Maschinenlernmodulen mit jeweils einem produktversionsübergreifenden Maschinenlernmodul (LG_1, LG_2, LG_3) sowie zwei produktversionsspezifischen Maschinenlernmodulen (L1_1, L2_1, L1_2, L2_2, L1_3, L2_3) bereitgestellt werden,
**dass** eine Anzahl oder Menge verfügbarer Trainingsdatensätze ermittelt wird, und
**dass** abhängig von der ermittelten Anzahl oder Menge einer der Sätze (SL1, SL2, SL3) zur Ausführung des Trainings sowie zur Ableitung des performanzoptimierten Designdatensatzes (ODR) selektiert wird.

7. Verfahren nach Anspruch 6, **dadurch gekennzeichnet,**
**dass** geprüft wird, ob für die erste und für die zweite Produktversion jeweils Produktvorgaben (E1, E2) vorliegen, und dass bei positivem Prüfungsergebnis ein Satz (SL1, SL2, SL3) selektiert wird, in dessen produktversionsspezifische Maschinenlernmodule Produktvorgaben (E1, E2) einzuspeisen sind.

8. System (DS) zum Steuern eines Produktionssystems (PS) zur Herstellung einer ersten Produktversion (PV1) anhand von Designdatensätzen (DR1, DR2) der ersten und einer zweiten Produktversion, eingerichtet zum Ausführen eines Verfahrens nach einem der vorhergehenden Ansprüche.

9. Computerprogrammprodukt eingerichtet zum Ausführen eines Verfahrens nach einem der Ansprüche 1 bis 7.

10. Computerlesbares Speichermedium mit einem Computerprogrammprodukt nach Anspruch 9.
